# EUROPEAN PATENT APPLICATION

(11) **EP 2 490 108 A2**
(43) Date of publication of application: **22.08.2012**
(21) Application number: 12155776.3
(22) Date of filing: 16.02.2012
(51) Int. Cl.: G06F 3/044

(54) **Touch Screen**

(30) Priority: 16.02.2011 KR 20110013790
(71) Applicant: Sehf-Korea Co., Ltd., Gyeongsangbuk-do (KR)
(72) Inventor: Kim, Jin-Han, Gyeongsangbuk-do (KR); Cho, Yong-Gu, Gyeongsangbuk-do (KR); Go, Hyoung-Jun, Gyeongsangbuk-do (KR); Kim, Kyoung-Hun, Gyeongsangbuk-do (KR); Kim, Jeong-Eun, Gyeongsangbuk-do (KR); Kim, Hyeon-Beom, Gyeongsangbuk-do (KR); Noh, Dae-Bin, Gyeongsangbuk-do (KR); Park, Jae-Young, Gyeongsangbuk-do (KR); Baek, Eun-Jin, Gyeongsangbuk-do (KR); Lee, Chung-Hee, Gyeongsangbuk-do (KR); Jung, Sung-Ho, Gyeongsangbuk-do (KR); Lee, Yeong-Seop, Gyeongsangbuk-do (KR); Cho, Jae-Wook, Gyeongsangbuk-do (KR); Jeong, Seok-Hong, Gyeongsangbuk-do (KR); Lee, Myung-Sop, Gyeongsangbuk-do (KR); Oh, Kyoung-Suk, Gyeongsangbuk-do (KR); Woo, Jung-Hun, Gyeongsangbuk-do (KR); Lee, Dong-Chul, Gyeongsangbuk-do (KR); Yim, Jong-Hyun, Gyeongsangbuk-do (KR); Jang, Sung-Il, Gyeongsangbuk-do (KR)
(74) Representative: Grünecker, Kinkeldey, Stockmair & Schwanhäusser

(57) **Abstract**

Provided is a touch screen that includes a first sensor layer and a second sensor layer. The first sensor layer and the second sensor layer form a sensor for recognizing a touch position on the touch screen.

## Description

### BACKGROUND OF THE INVENTION

### Field of the Invention

The following description relates to a touch screen, and more particularly, to a capacity-overlay touch screen.

### Description of the Related Art

Generally, a touch screen is a device in which an input detection means is integrated into a display means. The touch screen typically includes a display unit, such as a Liquid Crystal Display (LCD), and a touch panel disposed on the display unit.

In response to a person's finger tip or an object touching a character or a particular position on a screen, the touch screen is capable of recognizing the touch position, thus receiving a user's input through the screen touch.

Despite its low precision, the touch screen is often used as a guide display device in public places such as a subway, a department, a bank, commercial terminals in various shops, and the like. Recently, the touch screen has been used for portable terminals such as a cellular phone, a Digital Multimedia Broadcasting (DMB) receiver, a vehicle navigation, and the like.

Examples of types of a touch panel (or touch screen) include a resistive overlay type, a capacity overlay type, a surface acoustic wave type, an infrared beam type, and the like.

In a capacity-overlay type of touch pad, which is commonly used, a first conductive layer and a second conductive layer are formed on a first film and a second film, and the first conductive layer and the second conductive layer are connected with a controller through connection terminals. The controller senses a change in capacitance of a corresponding touch region which may be caused by a touch of an input means (e.g., a finger, a stylus pen, or the like), and determines a position of the touch region.

However, the conventional capacity-overlay touch screen has a large thickness and a low transmittance because of the plurality of films. That is, a high- transmittance material is used as a touch-screen film, but a transmittance of each film does not reach 100% as a result of the multiple layers. In addition, the overall transmittance of the touch screen inevitably decreases as the number of films used increases. In other words, the conventional capacity-overlay touch screen, because of having a plurality of films, has a large thickness and a low transmittance, such that visibility of the screen degrades and reduction in the width of the screen becomes difficult to achieve.

### SUMMARY OF THE INVENTION

In one general aspect, there is provided a touch screen including a display unit comprising a plurality of pixels to display an image, a first sensor layer positioned on or over the display unit, the first sensor layer comprising a transparent first conductive layer, a second sensor layer positioned on the first sensor layer, the second sensor layer comprising a transparent second conductive layer; and a protection plate forming a surface of the touch screen, wherein the second sensor layer is formed on a bottom surface of the protection plate, and the first sensor layer and the second sensor layer are adhered together using an adhesive member.

The first conductive layer may comprise a plurality of first electrode lines spaced apart from each other along a first direction, and the second conductive layer may comprise a plurality of second electrode lines spaced apart from each other along a second direction which intersects with the first direction.
A line width of a pattern forming a sensor in the first conductive layer and the second conductive layer may be less than 100µm.

In the second sensor layer, for a chrominance value, a* may be less than 1.5 ) and b* may be less than 1.5, and a transmittance may be higher than 91%, and a reflectivity may be lower than 10%,

wherein a* and b* are components of an International Commission on Illumination (CIE) coordinates system which expresses colors, and express strong colors as they go away from "0".

The adhesive member may comprise an Optical Clear Adhesive (OCA) tape.

A transmittance of the touch screen may be higher than 88%.

The display unit and the first sensor layer may be coupled by an adhesive member comprising an Optical Clear Adhesive (OCA) tape.

The first direction and the second direction may intersect with each other perpendicularly, and electrode lines of each conductive layer may be disposed at equal intervals.

The protection plate may be formed of glass or a plastic material.

In another aspect, there is provided a display device including a first sensor layer comprising a film that includes a first conductive layer deposited thereon, and a second sensor layer comprising a plate that includes a second conductive layer deposited thereon, the second conductive layer being adhered to the first conductive layer of the first sensor layer, wherein the first sensor layer and the second sensor layer form a sensor for recognizing a touch position.

The first sensor layer may further comprise a display unit, and the film may be adhered to the display unit.

The first sensor layer may comprise a plurality of first connection terminals for applying current to the first conductive layer, and the plurality of first connection terminals may be deposited on the film.

The second sensor layer may comprise a plurality of second connection terminals for applying current to the second conductive layer, and the plurality of second connection terminals may be deposited on the plate.

The transmittance of the touch screen may be 88% or higher.

The first conductive layer may comprise a plurality of first electrode lines spaced apart from each other along a first direction, and the second conductive layer may comprise a plurality of second electrode lines spaced apart from each other along a second direction which intersects with the first direction.

The first direction and the second direction may intersect with each other perpendicularly.

The electrode lines of each conductive layer may be disposed at equal intervals

Other features and aspects will be apparent from the following detailed description, the drawings, and the claims.

### BRIEF DESCRIPTION OF THE DRAWINGS

FIG. 1 is a diagram illustrating an example of a touch screen.
FIG. 2 is a diagram illustrating an example of a first conductive layer and a second conductive layer.
FIG. 3 is a diagram illustrating an example of a capacitance formation principle based on a first conductive layer and a second conductive layer.

### DETAILED DESCRIPTION OF THE EXEMPLARY EMBODIMENT

Hereinafter, an exemplary embodiment of the present invention will be Throughout the drawings and the detailed description, unless otherwise described, the same drawing reference numerals will be understood to refer to the same elements, features, and structures. The relative size and depiction of these elements may be exaggerated for clarity, illustration, and is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

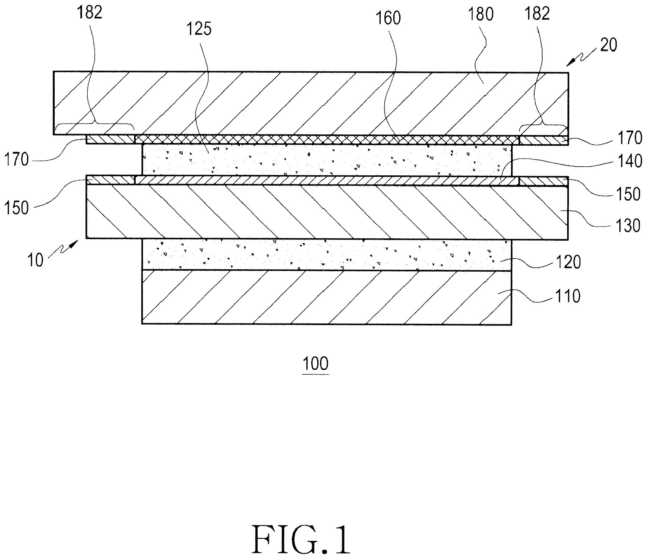

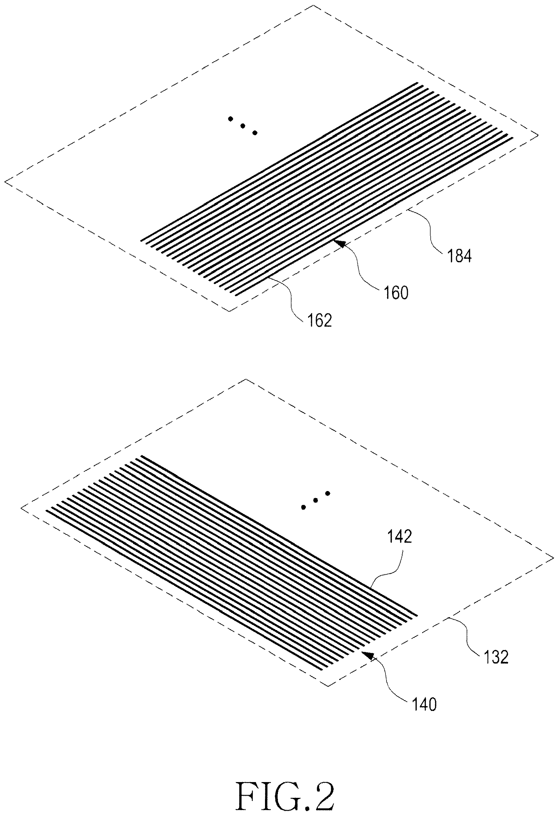

FIG. 1 illustrates an example of a touch screen, and FIG. 2 illustrates an example of a first conductive layer and a second conductive layer. The touch screen may be included in a terminal, for example, a mobile phone, a television, a monitor, a laptop, a tablet, an appliance, a kiosk, and the like.

Referring to FIG. 1, touch screen 100 includes a first sensor layer 10 that includes a display unit 110, a film 130, a first conductive layer 140, and first connection terminals 150. The touch screen 100 also includes a second sensor layer 20 including a protection plate 180, a second conductive layer 160, and second connection terminals 170. The touch screen 100 further includes a first adhesive member 120 and a second adhesive member 125. The first conductive layer 140 and the second conductive layer 160 form a sensor for recognizing a touch position of a person's finger tip or an object that touches the surface of the protection plate 180. For example, the first conductive layer 140 and the second conductive layer 160 have preset patterns. In various examples, the touch screen 100 may also be referred to as a display device that displays various data and that may be capable of receiving a user's input.

The display unit 110 includes a plurality of pixels, and displays an image through the pixels. In some examples, a portion such as a central portion of the top surface of the display unit 110 may be included in an effective display region of the touch screen 100 displayed to an observer. However, for convenience's sake, in the current example, the entire top surface of the display unit 110 is included in the effective display region. As an example, the display unit 110 may use a Liquid Crystal Display (LCD), an Organic Light Emitting Diodes (OLED), and the like.

The LCD may display an image under control of a controller (not shown). A general LCD includes an LCD panel which includes a liquid crystal layer to display an image, and a Back Light Unit (BLU) that provides light to the LCD panel. The LCD panel may include the liquid crystal layer and upper and lower glass substrates which are disposed on and under the liquid crystal layer to control an arrangement state of liquid crystal molecules. For example, the lower glass substrate may include thin film transistors and pixel electrodes, and the upper glass substrate may include a common electrode. The LCD panel may also include upper and lower polarization plates which are disposed on and under the liquid crystal layer to linearly polarize input light. Polarization directions of the upper and lower polarization plates may be orthogonal to each other.

In this example, the film 130 is positioned on the display unit 110 with the adhesive in between, and has the first conductive layer 140 deposited on its upper end thereof (i.e., top surface). The surface area of each of the first conductive layer 140 and the second conductive layer 160 is approximately equal to the area of the effective display region. The film 130 may be formed of an insulation material which is transparent to visible light. Examples of the insulation material may include Polyethylene Terephthalate (PET), Polycarbonate (PC), Polyethylene Naphthalate (PEN), Polyphenylenesulfaid (PES), etc.

The film 130 is attached (i.e., adhered) to the display unit 110 using the first adhesive member 120. For example, a portion of a lower end (i.e., bottom surface) of the film 130 may be adhered to the entire upper end (i.e., top surface) of the display unit 110 using the first adhesive member 120. The first adhesive member 120 is formed of an insulation material which is transparent to visible light. For example, the first adhesive member 120 may use an Optical Clear Adhesive (OCA) tape which is transparent to visible light, an adhesive (or pressure-sensitive adhesive), an ultraviolet-curable resin, and the like. The OCA tape is a both-side adhesive tape, and may be formed of an acryl-based material, silicon, and so forth.

Referring to FIG. 2, the first conductive layer 140 includes a plurality of first electrode lines (or linear electrodes) 142 which are deposited on a top surface 132 of the film 130 and extend along a first direction (e.g., an x axis or a horizontal direction). The first electrode lines 142 may be disposed at equal intervals or different intervals along a second direction (e.g., a y axis or a vertical direction) which intersects with the first direction perpendicularly. In this example, a line width of each first electrode line 142 and intervals between the first electrode lines 142 may be set arbitrarily. Each first electrode line 142 may be formed of a conductive material which is transparent to visible light. Examples of the conductive material include Indium Tin Oxide (ITO), Poly(3,4-Ethylenedioxythiophene) (PEDOT), and the like. The first conductive layer 140 may be formed by forming a conductive thin film through a vacuum deposition process and then performing patterning through a lithography process. Examples of the vacuum deposition process may include Electronic(E)-beam, sputtering, and so forth.

Referring back to FIG. 1, the first connection terminals 150 for applying current to the first conductive layer 140 and the second conductive layer 160, together with the second connection terminals 170, are deposited on the top surface of the film 130 such that the first connection terminals 150 are positioned outside the first conductive layer 140. For example, the first connection terminals 150 may be positioned outside the first conductive layer 140 (i.e., a periphery portion of the film 130) to facilitate access to the first connection terminals 150. A central portion of the film 130 may be included in the effective display region of the touch screen 100, and the peripheral portion of the film 130 may correspond to a region positioned outside the effective display region, i.e., the remaining region except for the central portion.

The first connection terminals 150 are electrically connected with the first conductive layer 140 through connection lines (not shown). For example, the first connection terminals 150 and the connection lines may be formed through a single process together with the first conductive layer 140 or through a separate process. The first connection terminals 150 may be formed of a material that is the same as the first conductive layer 140 or a material (e.g., an opaque conductive material such as silver) which is different from the first conductive layer 140. The first connection terminals 150 and the second connection terminals 170 may be electrically connected with a Flexible Printed Circuit Board (FPCB) on which, for example, the controller is mounted.

The protection plate 180 is positioned on the film 130, and includes the second conductive layer 160 that is deposited on a bottom surface thereof. A top surface of the protection plate 180 forms at least a portion of the entire surface of the touch screen 100 that is exposed to outside. For example, the protection plate 180 may be formed of an insulation material which is transparent to visible light. Examples of the insulation material may include glass, Polycarbonate (PC), Polyethylene Terephthalate (PET), and the like.

According to various examples herein, the bottom surface of the protection plate 180 which is part of the second sensor layer 20 may be antireflection (AR) coated. For example, the AR-coated layer may include an Nb₂O₅ layer and/or a SiO₂ layer. For example, in the AR-coated second sensor layer 20, for a chrominance value, a* may be less than 1.5 and b* may be less than 1.5, and a transmittance may be higher than 91%, and a reflectivity is lower than 5% or 10%. The reflectivity may be in a range between 5 - 10%. In some examples, the touch screen 100 including the first sensor layer 10 and the second sensor layer 20 or a combination of the first sensor layer 10, the second sensor layer 20 and the protection plate 180 may have a transmittance of 88% or higher. Herein, a* and b* are components of an International Commission on Illumination (CIE) coordinates system which expresses colors, and express strong colors as they go away from "0".

The top surface of the protection plate 180 may be exposed to outside. To prevent the periphery portion outside the central portion which is included in the effective display region from being exposed to outside, a light cut-off layer for cutting off visible light may be deposited on a periphery portion 182 on the bottom surface of the protection plate 180. For example, the light cut-off layer may be formed through a process such as black-ink printing. The second connection terminals 170 may be deposited on the light cut-off layer.

The protection plate 180 is attached (i.e., adhered) to the film 130 using the second adhesive member 125. For example, the lower end of the protection late 180 may be adhered to the upper end of the film 130 using the second adhesive member 125. The first conductive layer 140 and the second conductive layer 160 are adhered to each other using the second adhesive member 125. For example, the second adhesive member 125 may use an OCA tape which is transparent to visible light, an adhesive (or pressure-sensitive adhesive), a UV-curable resin, and the like.

Referring to FIG. 2, the second conductive layer 160 is deposited on a bottom surface 184 of the protection plate 180 and includes a plurality of electrode lines (or linear electrodes) 162 which may be disposed at equal intervals or at different intervals along the first direction. Each second electrode line 162 extends along the second direction which intersects with the first direction, for example, perpendicularly, or at a bias such as 45 degrees, 60 degrees, 75 degrees, and the like. A line width of each second electrode line 162 and intervals between the second electrode lines 162 may be set arbitrarily. In some examples, the second conductive layer 160 may be formed of the same material through the same process as the first conductive layer 140.

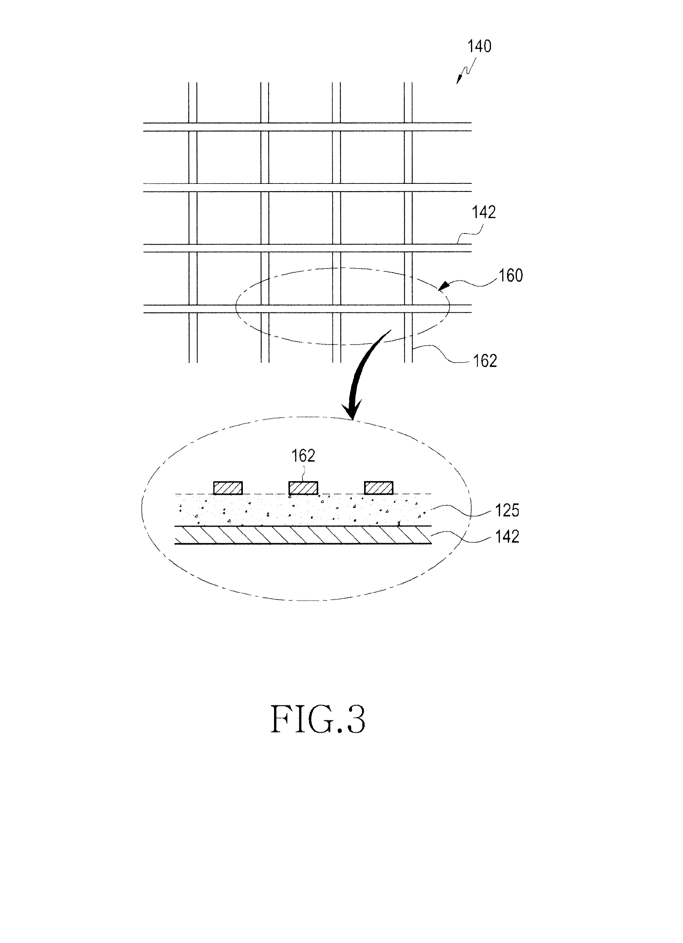

FIG. 3 illustrates an example of a capacitance formation principle based on the first conductive layer 140 and the second conductive layer 160. FIG. 3 illustrates an example of a plane view and a cross-sectional view of the first conductive layer 140 and the second conductive layer 160 which are adhered to each other by means of the second adhesive member 125.

The second adhesive member 125 that is interposed between the first conductive layer 140 and the second conductive layer 160 may function as an insulator, and may apply current to the first conductive layer 140 and the second conductive layer 160, thus generating a capacitance. By adjusting a thickness of the second adhesive member 125, the touch sensitivity of the touch screen 100 can also be adjusted.

Referring back to FIG. 1, the second connection terminals 170 for applying current to the first conductive layer 140 and the second conductive layer 160, together with the first connection terminals 150, may be deposited on the bottom surface (or light cut-off layer) of the protection plate 180, such that they are positioned outside the second conductive layer 160. For example, the second connection terminals 170 may be positioned outside the second conductive layer 160 (i.e., a periphery portion of the protection plate 180) to facilitate access to the second connection terminals 170. The second connection terminals 170 may be electrically connected with the second conductive layer 160 through connection lines (not shown). The second connection terminals 170 and the connection lines may be formed through a single process together with the second conductive layer 160 or through a separate process. In various examples, the second connection terminals 170 may be formed of a material which is the same as the second conductive layer 160 or a material (e.g., an opaque conductive material such as silver) which is different from the second conductive layer 160.

The touch screen described herein includes the first conductive layer deposited on the film and the second conductive layer deposited on the protection plate which may be adhered to each other, such that the touch screen has a small thickness and a high transmittance, thereby improving the visibility of the screen and achieving a slimmer product.

As a non-exhaustive illustration only, a terminal/device/unit described herein may refer to mobile devices such as a cellular phone, a personal digital assistant (PDA), a digital camera, a portable game console, and an MP3 player, a portable/personal multimedia player (PMP), a handheld e-book, a portable laptop PC, a global positioning system (GPS) navigation, a tablet, a sensor, and devices such as a desktop PC, a high definition television (HDTV), an optical disc player, a setup box, a home appliance, and the like that are capable of wireless communication or network communication consistent with that which is disclosed herein.

A computing system or a computer may include a microprocessor that is electrically connected with a bus, a user interface, and a memory controller. It may further include a flash memory device. The flash memory device may store N-bit data via the memory controller. The N-bit data is processed or will be processed by the microprocessor and N may be 1 or an integer greater than 1. Where the computing system or computer is a mobile apparatus, a battery may be additionally provided to supply operation voltage of the computing system or computer. It will be apparent to those of ordinary skill in the art that the computing system or computer may further include an application chipset, a camera image processor (CIS), a mobile Dynamic Random Access Memory (DRAM), and the like. The memory controller and the flash memory device may constitute a solid state drive/disk (SSD) that uses a non-volatile memory to store data.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A touch screen comprising:
a display unit comprising a plurality of pixels to display an image;
a first sensor layer positioned on or over the display unit, the first sensor layer comprising a transparent first conductive layer;
a second sensor layer positioned on the first sensor layer, the second sensor layer comprising a transparent second conductive layer; and
a protection plate forming a surface of the touch screen,
wherein the second sensor layer is formed on a bottom surface of the protection plate, and the first sensor layer and the second sensor layer are adhered together using an adhesive member.

2. The touch screen of claim 1, wherein the first conductive layer comprises a plurality of first electrode lines spaced apart from each other along a first direction, and
the second conductive layer comprises a plurality of second electrode lines spaced apart from each other along a second direction which intersects with the first direction.

3. The touch screen of claim 1, wherein a line width of a pattern forming a sensor in the first conductive layer and the second conductive layer is less than 100µm.

4. The touch screen of claim 1, wherein in the second sensor layer, for chrominance values, a* is less than 1.5 and b* is less than 1.5, and a transmittance is higher than 91 %, and a reflectivity is lower than 10%,
wherein a* and b* are components of an International Commission on Illumination (CIE) coordinates system which expresses colors, and express strong colors as they go away from "0".

5. The touch screen of claim 1, wherein the adhesive member comprises an Optical Clear Adhesive (OCA) tape.

6. The touch screen of claim 1, wherein a transmittance of the touch screen is higher than 88%.

7. The touch screen of claim 1, wherein the display unit and the first sensor layer are coupled by an adhesive member comprising an Optical Clear Adhesive (OCA) tape.

8. The touch screen of claim 2, wherein the first direction and the second direction intersect with each other perpendicularly, and electrode lines of each conductive layer are disposed at equal intervals.

9. The touch screen of claim 1, wherein the protection plate is formed of glass or a plastic material.

10. A display device comprising:
a first sensor layer comprising a film that includes a first conductive layer deposited thereon; and
a second sensor layer comprising a plate that includes a second conductive layer deposited thereon, the second conductive layer being adhered to the first conductive layer of the first sensor layer,
wherein the first sensor layer and the second sensor layer form a sensor for recognizing a touch position on the display device.

11. The display device of claim 10, wherein the first sensor layer further comprises a display unit, and the film is adhered to the display unit.

12. The display device of claim 10, wherein the first sensor layer comprises a plurality of first connection terminals for applying current to the first conductive layer, and the plurality of first connection terminals are deposited on the film.

13. The display device of claim 10, wherein the second sensor layer comprises a plurality of second connection terminals for applying current to the second conductive layer, and the plurality of second connection terminals are deposited on the plate.

14. The display device of claim 10, wherein the transmittance of the display device is 88% or higher.

15. The display device of claim 10, wherein the first conductive layer comprises a plurality of first electrode lines spaced apart from each other along a first direction, and the second conductive layer comprises a plurality of second electrode lines spaced apart from each other along a second direction which intersects with the first direction.

16. The display device of claim 15, wherein the first direction and the second direction intersect with each other perpendicularly.

17. The display device of claim 15, wherein the electrode lines of each conductive layer are disposed at equal intervals.
